# FASCICULE DE BREVET EUROPEEN

(11) **EP 2 553 252 B1**
(45) Date de publication et mention de la délivrance du brevet: **17.08.2016**
(21) Numéro de dépôt: 11710230.1
(22) Date de dépôt: 28.03.2011
(51) Int. Cl.: F02M 35/112, F02M 26/00

(54) **COLLECTEUR DE RÉPARTITION DE GAZ DANS LA CULASSE D'UN MOTEUR AVEC MÉLANGE DES GAZ D'ÉCHAPPEMENT RECIRCULÉ À CONTRE-COURANT DES GAZ D'ADMISSION**
GASVERTEILERKANAL IM ZYLINDERKOPF EINES MOTORS MIT RÜCKGEFÜHRTEM ABGASGEMISCH IN EINEM GEGENSTROM ZU DEN EINLASSGASEN
GAS DISTRIBUTION MANIFOLD IN THE CYLINDER HEAD OF AN ENGINE, WITH THE RECIRCULATED EXHAUST GAS MIXTURE IN A COUNTER-FLOW TO THE ADMISSION GASES

(30) Priorité: 31.03.2010 FR 1052438
(43) Date de publication de la demande: 06.02.2013
(73) Titulaire: Valeo Systèmes Thermiques, 78320 Le Mesnil-Saint-Denis (FR)
(72) Inventeur: MARTINS, Carlos, F-78150 Le Chesnay (FR); GESSIER, Bertrand, F-78490 Montfort L'amaury (FR)
(74) Mandataire: Gevers & Orès
(86) Numéro de dépôt international: PCT/EP2011/054751
(87) Numéro de publication internationale: WO 2011/120932

(56) Documents cités:
- EP-A2- 1 059 435
- EP-A2- 1 533 512
- WO-A1-97/34081
- WO-A1-2008/070895
- WO-A1-2008/116568
- WO-A1-2011/104118
- DE-A1- 19 811 634
- GB-A- 2 386 158

## Description

L'invention concerne le domaine des échangeurs de chaleur et plus particulièrement les échangeurs de chaleur utilisés dans le domaine automobile.

Un moteur thermique de véhicule automobile comporte une chambre de combustion, généralement formée par une pluralité de cylindres, dans laquelle un mélange de comburant et de carburant est brûlé pour générer le travail du moteur. Les gaz admis dans la chambre de combustion sont dénommés gaz d'admission.

Dans certains cas, ces gaz d'admission doivent être refroidis avant d'être introduits dans la chambre de combustion; cette fonction est remplie par un échangeur de chaleur, qui est un refroidisseur.

De manière classique, un échangeur de chaleur comporte un faisceau d'échange de chaleur formé par une pluralité d'éléments d'échange empilés entre deux plaques d'extrémités (plaque de fond et plaque de dessus). Les espaces entre les éléments d'échange du faisceau forment des canaux de conduite d'un flux de gaz à refroidir, ici des gaz d'admission. Les éléments d'échange du faisceau sont creux et conduisent un fluide caloporteur, destiné à échanger de la chaleur avec le flux de gaz à refroidir circulant dans les canaux de conduite de fluide et ainsi le refroidir.

Afin de réduire les émissions polluantes, il est connu d'introduire dans le flux de gaz d'admission des gaz d'échappement dit "recirculés". Il s'agit de gaz d'échappement prélevés en aval de la chambre de combustion pour être réacheminés (recirculés) vers le flux de gaz d'admission, en amont de la chambre de combustion, où ils sont mélangés aux gaz d'admission en vue de leur admission dans la chambre de combustion. Traditionnellement, les gaz d'échappement recirculés sont introduits via un ou plusieurs points d'introduction ménagés dans une canalisation d'admission des gaz s'étendant entre le refroidisseur des gaz d'admission et le moteur, afin que les gaz d'échappement recirculés se mélangent avec les gaz provenant du refroidisseur.

Une tendance actuelle vise à rapprocher au maximum l'échangeur de chaleur du moteur pour gagner en compacité.

Il est connu par la demande de brevet publiée sous le numéro WO2008/116568 un module d'échange de chaleur destiné à être monté sur les cylindres d'un moteur à combustion interne. En référence aux figures 1 et 2 représentant le module de la demande WO2008/116568, le module d'échange de chaleur comprend, dans sa partie amont 110, un faisceau d'échange de chaleur 111, et dans sa partie aval 103, des canalisations de sortie 106 agencées pour se connecter respectivement aux cylindres du moteur.

Au cours de son fonctionnement, un flux de gaz d'admission G est introduit par une face amont du module d'échange pour être refroidi par le faisceau d'échange de chaleur 111, le flux refroidi étant ensuite réparti dans les canalisations de sortie du module d'échange pour être admis dans les cylindres du moteur auxquels les canalisations 106 sont respectivement connectées.

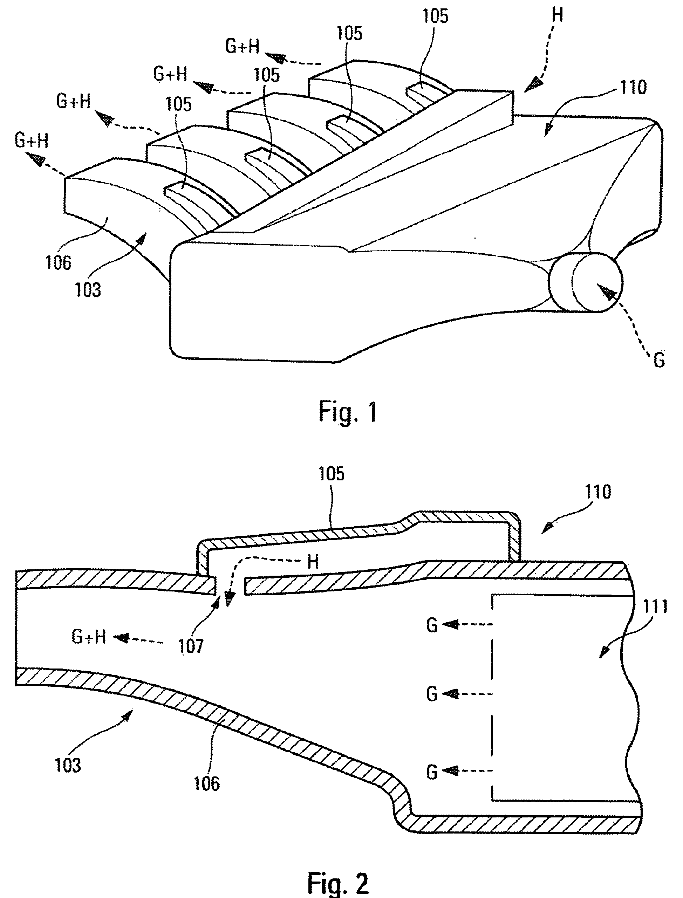

Chaque canalisation de sortie 106 du module d'échange de chaleur, dans laquelle circule le flux de gaz d'admission refroidi G, comprend un orifice d'injection 107 d'un flux de gaz d'échappement recirculés H, qui est injecté par une canalisation d'injection 105 connectée à la canalisation de sortie 106 du module d'échange au niveau dudit orifice d'injection 107, comme représenté sur la figure 2. Ainsi, le flux de gaz d'admission G et le flux de gaz d'échappement recirculés H se mélangent dans les canalisations de sortie 106 du module avant leur admission dans les cylindres du moteur.

Comme représenté sur la figure 2, les gaz d'échappement recirculés sont injectés dans une direction orthogonale à la direction du flux de gaz d'admission ce qui nécessite que les canalisations d'injection 105 soient rapportées sur le module d'échange ce qui augmente son volume.

Par ailleurs, pour permettre un mélange homogène entre les deux flux de gaz, il est nécessaire que le module de mélange possède une longueur suffisante en aval du lieu d'injection. Pour un module d'échange compact, une injection du flux de gaz d'échappement de manière orthogonale au flux de gaz d'admission rend difficile la création d'une entropie suffisante à l'homogénéisation du mélange.

L'injection à contre-courant du flux de gaz d'échappement recirculés est connue du document EP 1 059 435 A2. Par ailleurs, le document WO 97 / 34 081 A1 décrit un collecteur d'admission comprenant des ouvertures pour l'injection de gaz d'échappement recirculés à l'extrémité aval des tubulures d'admission.

Afin d'éliminer au moins certains de ces inconvénients, l'invention concerne un collecteur selon la revendication 1.

Grâce à l'invention, le flux de gaz d'échappement recirculés est injecté à contre-courant du flux de gaz d'admission ce qui permet de créer une forte entropie dans la zone de mélange et ainsi favorise la formations de turbulences permettant l'homogénéisation des deux gaz. Par ailleurs, la qualité du mélange des deux flux de gaz ne dépend pas uniquement du volume du collecteur situé en aval du lieu d'injection des gaz d'échappement recirculés. En effet, comme le flux de gaz d'échappement recirculés se déplace à contre-courant, c'est-à-dire vers l'amont, une partie du volume du collecteur situé en amont du lieu d'injection permet de participer au mélange des deux flux de gaz.

De manière avantageuse, un collecteur avec des moyens d'injection à contre-courant peut être compact et permettre un mélange homogène des gaz avant leur admission dans la culasse.

De préférence, les moyens d'injection définissent une pluralité d'orifices d'injection orientés vers l'amont. De manière avantageuse, le flux de gaz d'échappement recirculés est divisé par lesdits orifices d'injection en une pluralité de flux de gaz d'échappement recirculés élémentaires circulant à contre-courant ce qui favorise le mélange des deux flux de gaz.

Selon un aspect de l'invention, la direction d'injection du flux de gaz d'échappement recirculés et la direction de circulation du flux de gaz d'admission formant un angle d'injection, l'angle d'injection est inférieur à 30°. Un angle d'injection permet de manière avantageuse une injection à contre-courant, favorisant les turbulences, tout en permettant de ne pas disposer les moyens d'injection directement dans le flux des gaz d'admission, les moyens d'injection pouvant avantageusement être disposés en périphérie du collecteur.

Selon l'invention, les moyens d'injection sont ménagés à l'extrémité aval du collecteur. Ainsi, on tire directement partie du volume du collecteur de répartition situé en amont du lieu d'injection pour homogénéiser les deux flux de gaz. Une injection orthogonale d'un flux de gaz d'échappement recirculés à l'extrémité aval du collecteur risquerait de ne pas permettre d'obtenir un mélange homogène.

Selon un aspect de l'invention, le carter de collecteur ayant une section de passage du flux de gaz d'admission rectangulaire, les moyens d'injection débouchent sur au moins une longueur du carter de collecteur.

Selon une variante, les moyens d'injection débouchent sur au moins deux côtés adjacents du carter de collecteur. Une injection périphérique permet avantageusement d'augmenter la zone de mélange des deux flux de gaz.

De préférence, les moyens d'injection sont formés dans le carter de collecteur. En intégrant les moyens d'injection dans le carter de collecteur, le collecteur obtenu peut avantageusement posséder des dimensions réduites.

Selon une variante, le carter de collecteur comportant des parois de guidage du flux d'admission, les moyens d'injection sont formés à distance desdites parois.

L'invention concerne également un dispositif de mélange d'un flux de gaz d'admission et d'un flux de gaz d'échappement recirculés en vue de leur admission dans la culasse d'un moteur thermique de véhicule automobile, le dispositif comportant un échangeur de chaleur comportant un faisceau d'échange de chaleur de refroidissement de gaz et un collecteur de répartition des gaz dans la culasse tel que présenté précédemment.

L'invention sera mieux comprise à l'aide de la description suivante d'une forme de réalisation du dispositif de l'invention, en référence au dessin annexé, sur lequel :
- la figure 1 représente une vue en perspective d'un dispositif de mélange de gaz dans une culasse de moteur selon l'art antérieur (déjà commentée);
- la figure 2 représente une vue en coupe longitudinale du dispositif de la figure 1, la coupe étant réalisée selon la direction de circulation des gaz dans le dispositif (déjà commentée) ;
- la figure 3 représente une vue en perspective du dispositif de mélange de gaz selon l'invention comprenant un collecteur d'entrée, un échangeur de chaleur, un collecteur de sortie et une vanne d'admission de gaz d'échappement recirculés dans le dispositif, le dispositif étant vu sensiblement depuis l'avant, c'est-à-dire, côté culasse ; et
- la figure 4 représente une vue en coupe longitudinale du collecteur de sortie du dispositif de la figure 3 relié à une culasse d'un moteur, la coupe étant réalisée selon la direction de circulation des gaz dans le dispositif.

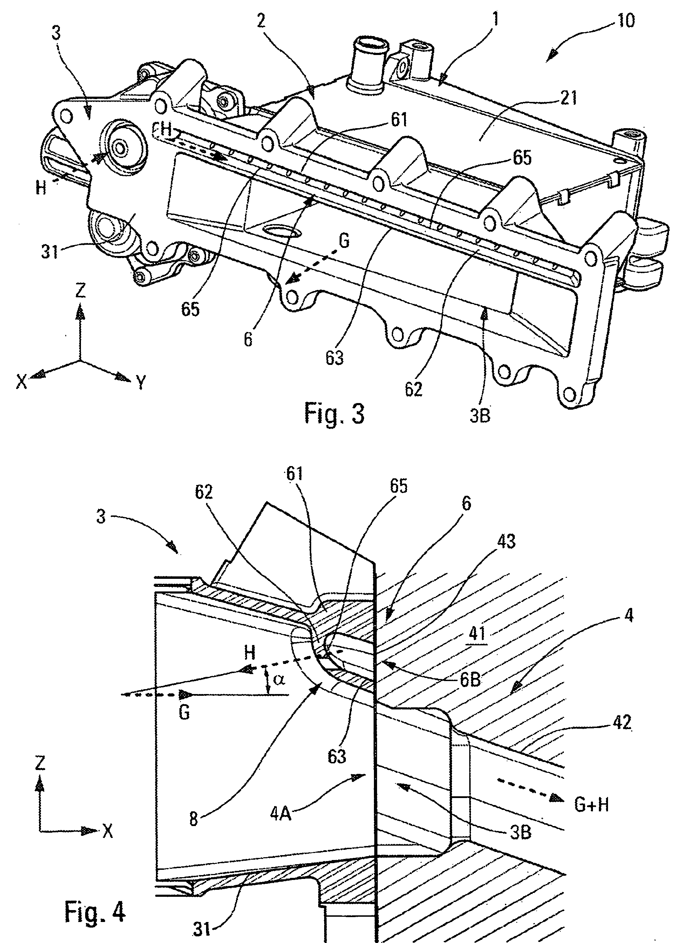

En référence à la figure 3, un dispositif 10 de mélange et de répartition d'un flux de gaz dans la culasse d'un moteur thermique de véhicule automobile (représentée sur la figure 4) comporte un échangeur de chaleur 2 comprenant un faisceau d'échange de chaleur (non visible) agencé pour échanger de la chaleur avec un premier flux de gaz (G), ici des gaz d'admission comportant de l'air, circulant dans le faisceau d'échange de chaleur.

Par la suite, on définit les termes « amont » et « aval » par rapport au sens de circulation du flux de gaz d'admission (G) dans le dispositif de mélange 10, les gaz d'admission (G) circulant de l'amont vers l'aval dans le dispositif 10 selon une direction X de circulation des gaz représentée sur la figure 3.

Les gaz d'admission (G) sont introduits dans l'échangeur de chaleur 2 par un collecteur d'entrée 1, monté en amont de l'échangeur de chaleur 2, et évacués par un collecteur de sortie 3, également dénommé collecteur de répartition 3, monté en aval de l'échangeur de chaleur 2 et destiné à être relié à la culasse 4 du moteur. Le collecteur de répartition 3 permet une admission répartie, dans la culasse 4, du flux de gaz refroidi (G) issu de l'échangeur de chaleur 2.

Le dispositif de mélange 10 comprend en outre une canalisation 8 d'injection d'un flux de gaz d'échappement recirculés du moteur (H) connus de l'homme du métier sous son abréviation anglaise « EGR » correspondant à « Exhaust Gas recirculation ».

En référence à la figure 4, la canalisation d'injection 8 est formée entre le collecteur de sortie 3 et la culasse 4 de manière à injecter le flux de gaz d'échappement recirculés (H) dans le flux de gaz d'admission (G) en amont de la culasse 4.

Afin de bien comprendre l'invention, chaque élément du dispositif de mélange selon l'invention va être décrit individuellement aussi bien dans sa structure que dans sa fonction.

### - Echangeur de chaleur

En référence à la figure 3, l'échangeur de chaleur 2 comprend un carter d'échangeur 21 enveloppant un faisceau d'échange de chaleur comportant une pluralité d'éléments d'échange empilés (non représentés). Les espaces entre les éléments d'échange du faisceau forment des canaux de conduite du flux de gaz à refroidir (G), ici les gaz d'admission. Les éléments d'échange du faisceau sont creux et conduisent un fluide caloporteur, destiné à échanger de la chaleur avec le flux de gaz à refroidir (G) circulant d'amont en aval dans les canaux de conduite de fluide.

Le faisceau d'échange de chaleur se présente sous la forme d'un parallélépipède s'étendant dans sa longueur selon la direction X de circulation des gaz et comprenant une face d'entrée amont par laquelle sont introduits les gaz d'admission à refroidir (G) et une face de sortie aval par laquelle sont évacués les gaz d'admission refroidis (G).

Par la suite, on définit les termes « supérieur », « inférieur », « gauche » et « droite » par rapport à l'orientation du dispositif de mélange 10 représenté en perspective sur la figure 3 et conformément au repère orthogonal d'axes (X , Y, Z), l'axe X étant orienté de l'amont vers l'aval et correspondant à la direction X d'écoulement des gaz, l'axe Y étant orienté de la gauche vers la droite et l'axe Z étant orienté du bas vers le haut, c'est à dire de la partie inférieure du dispositif vers sa partie supérieure.

### - Collecteur d'entrée

Le collecteur d'entrée 1, représenté sur la figure 3, permet de guider et de répartir le flux de gaz à refroidir (G) sur la surface totale de la face d'entrée du faisceau d'échange de chaleur. A cet effet, le collecteur d'entrée 1 se présente sous la forme d'un carter sensiblement évasé de l'amont vers l'aval dont l'extrémité aval est reliée à l'extrémité amont du carter d'échangeur 21. Le collecteur d'entrée 1 comporte une face de sortie débouchant sur la face d'entrée de l'échangeur de chaleur 2, et un orifice d'entrée (non visible), par exemple situé latéralement, c'est-à-dire, dans un plan situé perpendiculairement à sa face de sortie, par lequel sont introduits les gaz d'admission à refroidir (G) dans le collecteur d'entrée 1.

### - Collecteur de répartition

En référence aux figures 3 et 4, le collecteur de répartition 3, appelé également collecteur de sortie 3, monté en aval de l'échangeur de chaleur 2, comprend une face d'entrée de gaz d'admission (G) dans laquelle débouche la face de sortie du faisceau d'échange de chaleur de l'échangeur 2, et une face de sortie 3B destinée à être reliée à la face d'entrée des gaz de la culasse 4.

Le collecteur de sortie 3 comprend un carter de collecteur 31 guidant les gaz introduits de la face d'entrée du collecteur de sortie 3 jusqu'à la culasse du moteur 4 via la face de sortie 3B.

Comme indiqué précédemment, dans ce mode de réalisation, la canalisation d'injection tubulaire 8 du dispositif de mélange 10 est disposée à l'interface entre le collecteur de sortie 3 et la culasse 4. La canalisation d'injection tubulaire 8 est formée de deux parties distinctes, une première partie solidaire du carter du collecteur de sortie 31 et une deuxième partie solidaire de la culasse du moteur 4.

La partie de la canalisation d'injection tubulaire 8 qui est solidaire du carter 31 du collecteur de sortie 3 se présente sous la forme d'une goulotte 6 d'injection de gaz d'échappement recirculés. La goulotte d'injection 6 est agencée pour injecter un flux de gaz d'échappement recirculés (H) dans le flux de gaz refroidis (G) de manière à ce que les deux flux de gaz (G, H) se mélangent. Dans cet exemple, la goulotte d'injection 6 s'étend à l'extrémité aval du collecteur de sortie 3, à l'intérieur du carter de collecteur 31, le long de la paroi supérieure du carter de collecteur 31 comme représenté sur la figure 3. La goulotte d'injection 6 s'étend ici rectilignement depuis la gauche vers la droite dans toute la longueur de la paroi supérieure du carter de collecteur 31.

En référence à la figure 4, la goulotte d'injection 6 se présente sous la forme d'une demi-coquille et comporte une paroi extérieure 61 s'étendant selon la direction X, une paroi de fond 62 s'étendant selon la direction Y et une paroi intérieure 63 s'étendant selon la direction X.

La paroi extérieure 61 de la goulotte d'injection 6 est ici formée par la paroi du carter de collecteur 31. Les parois de fond 62 et intérieure 63 s'étendent dans le carter de collecteur 31, la paroi intérieure 63 s'étendant sensiblement parallèlement à la paroi extérieure 61 et la paroi de fond 62 reliant lesdites parois intérieure 63 et extérieure 61. Autrement dit, la goulotte d'injection 6 possède une section en U dont l'ouverture du U est orientée vers l'aval.

La goulotte d'injection 6 comporte une face ouverte 6B, correspondant à l'ouverture du U, qui est configurée pour être fermée par la culasse 4 de manière à former une canalisation d'injection tubulaire 8.

En référence à la figure 3, la canalisation d'injection 6 s'étend transversalement à la direction X de circulation des gaz et comprend des moyen d'injection ménagés dans la goulotte d'injection 6 afin d'injecter le flux de gaz d'échappement recirculés (H) dans le flux de gaz refroidis (G). La goulotte d'injection 6 est fermée à son extrémité gauche par une paroi gauche s'étendant sensiblement parallèlement au plan (X, Z) qui est percée par un orifice d'entrée pour mettre en communication le volume de la goulotte d'injection 6 avec une entrée de gaz d'échappement recirculés (H), comme expliqué plus loin. La goulotte d'injection 6 est fermée à son extrémité droite par une paroi droite, s'étendant sensiblement parallèlement au plan (X, Z), définie dans la paroi latérale droite du carter de collecteur 31.

En référence à la figure 3, les moyens d'injection se présentent sous la forme d'une pluralité d'orifices d'injection 65 qui sont ménagés dans le carter de collecteur 31, par exemple, dans l'épaisseur des parois intérieures dudit carter 31. Le flux de gaz d'échappement recirculés (H) se déplace dans la goulotte d'injection selon la direction Y de la gauche vers la droite pour être divisé, par les orifices d'injection 65, en une pluralité de flux de gaz d'échappement recirculés élémentaires qui sont injectés dans le volume du carter de collecteur 31.

Les orifices d'injection 65 sont orientés vers l'amont. Autrement dit, les orifices d'injection 65 sont orientés à contre-courant du flux de gaz d'admission (G) de manière à former des turbulences importantes. Cela permet avantageusement de favoriser le cisaillement du flux de gaz refroidis (G) par le flux de gaz d'échappement (H). En effet, les vitesses relatives des deux flux étant élevées, l'homogénéisation du mélange est favorisée.

Toujours en référence à la figure 4, la direction d'injection du flux de gaz d'échappement recirculés (H) et la direction X de circulation du flux de gaz d'admission (G) forment un angle d'injection α. Pour favoriser la formation de turbulences, l'angle d'injection a est, de préférence, inférieur à 30°. Ainsi, le flux de gaz d'échappement recirculés (H) et le flux de gaz d'admission (G) se mélangent à haute vitesse ce qui a pour conséquence une augmentation de l'entropie. L'homogénéité des deux flux de gaz est alors améliorée.

Un angle d'injection α compris entre 20° et 30° permet avantageusement de ménager les orifices d'injection 65 en périphérie du carter tout en permettant une injection du flux de gaz d'échappement recirculés vers le centre du carter de collecteur, c'est-à-dire vers le centre de sa section de passage de gaz d'admission. Lorsque l'angle d'injection α est faible, c'est-à-dire inférieur à 5°, les moyens d'injection 65 doivent être disposés dans le carter de guidage des gaz d'admission ce qui diminue le volume de mélange du collecteur.

Un angle d'injection a compris entre 20° et 30° permet en outre d'éviter que le flux de gaz d'échappement recirculés ne se plaque sur les parois intérieures du carter de guidage ce qui empêcherait la formation de turbulences.

Il a été ici décrit une pluralité d'orifices d'injection mais il va de soi que les moyens d'injection pourraient également se présenter sous la forme d'une fente longitudinale orientée vers l'amont, de préférence, avec un angle d'injection α, inférieur à 30°.

Il va de soi que les angles d'injection des orifices d'injection 65 pourraient être différents les uns des autres. Par exemple, l'angle d'injection des orifices d'injection pourrait être fonction de la distance dudit orifice d'injection au carter de collecteur. De préférence, l'angle d'injection des orifices d'injection est inversement proportionnel à la distance dudit orifice au carter de collecteur.

Par ailleurs, afin d'améliorer plus encore l'effet de cisaillement, l'ouverture des moyens d'injection 65 de la goulotte d'injection 6 est ménagée de manière à permettre une injection des gaz d'échappement (H) à haute vitesse. Pour un débit de gaz recirculés constant, plus l'ouverture des moyens d'injection est étroite, plus la vitesse d'injection des gaz recirculés (H) est importante. Cependant, des moyens d'injection 65 dont l'ouverture est étroite est sujette à encrassement en raison des particules lourdes (suie, etc.) en suspension dans le flux de gaz d'échappement (H). A cet effet, une ouverture de largeur comprise entre 3mm et 7mm, de préférence égale à 5 mm, assure un compromis entre une vitesse d'injection suffisante et une limitation des risques d'encrassement. La largeur de l'ouverture est déterminée dans cette plage en fonction de la nature des gaz d'échappement (H). Plus les gaz d'échappement (H) comprennent de particules lourdes - on dit que les gaz d'échappement sont « chargés » - plus la largeur de l'ouverture est importante pour limiter le risque d'encrassement.

Les moyens d'injection 65 sont, dans cet exemple, formés dans le carter de collecteur 31, de préférence dans la paroi de fond 62 de la goulotte d'injection 6. Les moyens d'injection 65 sont ici ménagés à distance des parois de guidage du flux d'admission du carter de collecteur 31 de manière à éviter une injection le long desdites parois de guidage. Une telle injection risquerait d'entraîner un écoulement laminaire du flux de gaz d'échappement vis-à-vis du flux de gaz d'admission et empêcherait un mélange efficace.

Comme indiqué précédemment, la canalisation d'injection 8 comporte une partie solidaire de la culasse 4 agencée pour fermer la face ouverte 6B de la goulotte d'injection 6.

Pour permettre l'admission des gaz d'échappement recirculés (H) dans la goulotte d'injection 6, le collecteur de sortie 3 comporte une entrée d'admission d'un flux de gaz d'échappement recirculés (H) issu du moteur afin que les gaz d'échappement recirculés (H) pénètrent dans le collecteur de sortie depuis la partie d'extension gauche du carter de collecteur de sortie (le flux entrant dans le collecteur de sortie étant représenté par une flèche désignée H) pour être ensuite guidé, par une vanne de contrôle des flux ou une durite, dans la goulotte d'injection 6 par l'orifice d'entrée évoqué plus haut (le flux entrant dans la goulotte d'injection étant représenté par une flèche désignée H).

### - Culasse du moteur

En référence à la figure 4, la culasse 4 du moteur comporte un corps de culasse 41 dans lequel est ménagé une canalisation d'admission 42 agencée pour conduire les gaz issus du collecteur de sortie 3 jusqu'aux cylindres du moteur. La canalisation d'admission 42 possède une face d'entrée 4A dont les dimensions correspondent à la face de sortie 3B du collecteur de sortie 3. Dans cet exemple, la deuxième partie de la canalisation d'injection 8, qui est solidaire de la culasse 4, est formée par une surface plane 43 du corps de culasse 41.

En référence à la figure 4, lors du montage du collecteur de sortie 3 avec la culasse 4, la goulotte d'injection 6, formée à l'extrémité aval du carter du collecteur 31, entre en contact avec la surface plane 43 du corps de culasse 41, la surface plane 43 de la culasse 4 venant fermer la face ouverte 6B de la goulotte d'injection 6 pour former une canalisation d'injection tubulaire 8 constituée en amont par la goulotte d'injection 6 et en aval par la surface plane 43 du corps de culasse 41. La canalisation tubulaire 8 possède une section sensiblement en U.

Le collecteur de sortie 3 et la culasse 4 sont ici solidarisés l'un à l'autre, par exemple, par des moyens mécaniques tels que vissage ou autre.

L'invention a été ici décrite avec une canalisation d'injection 8 formée entre le collecteur de répartition 3 et la culasse 4 du moteur. Cependant, la canalisation d'injection tubulaire 8 peut être formée entre le collecteur de répartition 3 et l'échangeur de chaleur 2, ou dans le collecteur de sortie 3, par une paroi supplémentaire de celui-ci ou par un élément tubulaire rapporté.

Une mise en oeuvre de l'invention va être maintenant présentée en référence à la figure 4.

### - Mise en oeuvre

Au cours du fonctionnement du dispositif de mélange 10 selon l'invention, un flux de gaz d'admission à refroidir (G) est introduit par l'orifice d'entrée du collecteur d'entrée 1 et circule d'amont en aval dans le faisceau d'échange de chaleur, selon la direction X de circulation des gaz, pour être refroidi. Le flux de gaz d'admission refroidis (G) circule ensuite dans le collecteur de sortie 3.

Le flux de gaz d'échappement recirculés (H) se déplace dans la goulotte d'injection 6 selon la direction Y de la gauche vers la droite pour être divisé en une pluralité de flux de gaz d'échappement recirculés élémentaires qui sont injectés dans le carter de collecteur 31.

Au niveau de la face de sortie 3B du collecteur de sortie 3, le flux de gaz d'admission refroidis (G) est cisaillé par le flux de gaz d'échappement recirculés

(H) injectés dans le sens inverse à celui du flux de gaz refroidis. Les turbulences générées par le cisaillement dans la zone de confluence des gaz (H, G) favorisent le mélange des flux de gaz pour former un flux de gaz homogène qui est admis par les cylindres du moteur via la culasse 4.

Ainsi, le dispositif selon l'invention permet d'obtenir un mélange homogène des gaz admis dans la culasse 4 du moteur en alliant compacité, efficacité et rendement. En outre, le dispositif peut être monté de manière simple et rapide.

## Revendications

1. Collecteur (3) de répartition de gaz dans la culasse (4) d'un moteur thermique de véhicule automobile, le collecteur (3) comprenant :
- un carter de collecteur (31) comportant une face d'entrée d'un flux de gaz d'admission (G) et une face de sortie (3B) destinée à déboucher dans la culasse du moteur (4), de façon à autoriser une circulation du flux de gaz d'admission d'amont en aval dans le carter de collecteur (31) ; et
- des moyens d'injection d'un flux de gaz d'échappement recirculés (H) du moteur dans le flux de gaz d'admission (G);
collecteur **caractérisé par le fait que** :
- les moyens d'injection comportent une canalisation d'injection (8) formée entre le collecteur de sortie (3) et la culasse (4) et se présentant sous la forme d'une goulotte (6) possédant une section en U et d'injection de gaz d'échappement recirculés,
- ladite goulotte d'injection (6) comportant une face ouverte (6B), correspondant à l'ouverture du U, qui est configurée pour être fermée par ladite culasse (4) de manière à former ladite canalisation d'injection tubulaire (8),
- lesdits moyens d'injections définissent une pluralité d'orifices d'injection (65) formés dans l'épaisseur des parois intérieures dudit carter, et
- **par le fait que** les moyens d'injection sont conformés de manière à ce que le flux de gaz d'échappement recirculés (H) soit injecté à contre-courant du flux de gaz d'admission (G) et **par le fait que** les moyens d'injections (65) sont ménagés à l'extrémité aval du collecteur (3).

2. Collecteur (3) selon la revendication 1, dans lequel les orifices d'injection (65) sont orientés vers l'amont.

3. Collecteur (3) selon l'une des revendications 1 à 2, dans lequel, la direction d'injection du flux de gaz d'échappement recirculés (H) et la direction de circulation du flux de gaz d'admission (G) formant un angle d'injection (α), l'angle d'injection (α) est inférieur à 30°.

4. Collecteur selon l'une des revendications 1 à 3, dans lequel, le carter de collecteur (31) ayant une section de passage du flux de gaz d'admission rectangulaire, les moyens d'injection débouchent sur au moins une longueur du carter de collecteur (31).

5. Collecteur selon la revendication 4, dans lequel les moyens d'injection débouchent sur au moins deux côtés adjacents du carter de collecteur (31).

6. Collecteur selon l'une des revendications 2 à 5, dans lequel les moyens d'injection sont formés dans le carter de collecteur (31).

7. Collecteur selon l'une des revendications 2 à 6, dans lequel, le carter de collecteur (31) comportant des parois de guidage du flux d'admission (G), les moyens d'injection sont formés à distance desdites parois.

8. Dispositif de mélange d'un flux de gaz d'admission (G) et d'un flux de gaz d'échappement recirculés (H) en vue de leur admission dans la culasse (4) d'un moteur thermique de véhicule automobile, le dispositif comportant :
- un échangeur de chaleur (2) comportant un faisceau d'échange de chaleur de refroidissement de gaz (G) et
- un collecteur (3) de répartition des gaz dans la culasse (4) selon l'une des revendications 1 à 7.

## Patentansprüche

1. Gasverteilerkollektor (3) im Zylinderkopf (4) eines Verbrennungsmotors eines Kraftfahrzeugs, wobei der Kollektor (3) Folgendes umfasst:
- ein Kollektorgehäuse (31), umfassend eine Eingangsfläche eines Einlassgasstroms (G) und eine Ausgangsfläche (3B), die dazu bestimmt ist, in den Zylinderkopf des Motors (4) zu münden, um eine Zirkulation des Einlassgasstroms von stromaufwärts zu stromabwärts im Kollektorgehäuse (31) zu gestatten; und
- Mittel zum Einspritzen eines rückgeführten Abgasstroms (H) vom Motor in den Einlassgasstrom (G);
wobei der Kollektor **dadurch gekennzeichnet ist, dass**:
- die Einspritzmittel einen Einspritzkanal (8) umfassen, der zwischen dem Ausgangskollektor (3) und dem Zylinderkopf (4) ausgebildet ist und in Form einer Rinne (6) mit einem U-förmigen Querschnitt zum Einspritzen von rückgeführten Abgasen vorhanden ist,
- wobei die Einspritzrinne (6) eine offene Fläche (6B) entsprechend der Öffnung des U umfasst, die dazu vorgesehen ist, durch den Zylinderkopf (4) geschlossen zu werden, um den röhrenförmigen Einspritzkanal (8) zu bilden,
- wobei die Einspritzmittel eine Vielzahl von Einspritzöffnungen (65) definierten, die in der Dicke der Innenwände des Gehäuses ausgebildet sind, und
- dadurch, dass die Einspritzmittel derart ausgebildet sind, dass der rückgeführte Abgasstrom (H) in einem Gegenstrom zu dem Einlassgasstrom (G) eingespritzt wird, und dass die Einspritzmittel (65) am stromabwärtigen Ende des Kollektors (3) angeordnet sind.

2. Kollektor (3) nach Anspruch 1, bei dem die Einspritzöffnungen (65) stromaufwärts ausgerichtet sind.

3. Kollektor (3) nach einem der Ansprüche 1 bis 2, bei dem die Einspritzrichtung des rückgeführten Abgasstroms (H) und die Zirkulationsrichtung des Einlassgasstroms (G) einen Einspritzwinkel (α) bilden, wobei der Einspritzwinkel (α) kleiner als 30° ist.

4. Kollektor nach einem der Ansprüche 1 bis 3, bei dem das Kollektorgehäuse (31) einen rechteckigen Durchgangsquerschnitt des Einlassgasstroms hat, wobei die Einspritzmittel auf mindestens einer Länge des Kollektorgehäuses (31) münden.

5. Kollektor nach Anspruch 4, bei dem die Einspritzmittel auf mindestens zwei aneinandergrenzenden Seiten des Kollektorgehäuses (31) münden.

6. Kollektor nach einem der Ansprüche 2 bis 5, bei dem die Einspritzmittel im Kollektorgehäuse (31) ausgebildet sind.

7. Kollektor nach einem der Ansprüche 2 bis 6, bei dem, wobei das Kollektorgehäuse (31) Führungswände des Einlassstroms (G) umfasst, die Einspritzmittel in einem Abstand zu den Wänden ausgebildet sind.

8. Vorrichtung zum Mischen eines Einlassgasstroms (G) und eines rückgeführten Abgasstroms (H) für ihren Einlass in den Zylinderkopf (4) eines Verbrennungsmotors eines Kraftfahrzeugs, wobei die Vorrichtung Folgendes umfasst:
- einen Wärmetauscher (2), umfassend ein Wärmetauschbündel zum Kühlen von Gasen (G), und
- einen Gasverteilerkollektor (3) in dem Zylinderkopf (4) nach einem der Ansprüche 1 bis 7.

## Claims

1. Gas distribution manifold (3) in the cylinder head (4) of a heat engine of a motor vehicle, the manifold (3) comprising:
- a manifold housing (31) comprising an input face for a flow of intake gas (G) and an output face (3B) intended to open into the cylinder head of the engine (4), so as to allow a circulation of the flow of intake gas from upstream to downstream in the manifold housing (31); and
- means for injecting a flow of recirculated exhaust gases (H) from the engine into the flow of intake gas (G);
the manifold being **characterized in that**:
- the injection means comprise an injection pipeline (8) formed between the output manifold (3) and the cylinder head (4) and being in the form of a channel (6) having a U section and for injection of recirculated exhaust gases,
- said injection channel (6) comprising an open face (6B), corresponding to the opening of the U, which is configured to be closed by said cylinder head (4) so as to form said tubular injection pipeline (8),
- said injection means define a plurality of injection orifices (65) formed in the thickness of the internal walls of said housing, and
- **in that** the injection means are configured so that the flow of recirculated exhaust gases (H) is injected counter-current to the flow of intake gas (G) and **in that** the injection means (65) are formed at the downstream end of the manifold (3).

2. Manifold (3) according to Claim 1, in which the injection orifices (65) are oriented in the upstream direction.

3. Manifold (3) according to one of Claims 1 and 2, in which, the direction of injection of the flow of recirculated exhaust gases (H) and the direction of circulation of the flow of intake gas (G) forming an injection angle (α), the injection angle (α) is less than 30°.

4. Manifold according to one of Claims 1 to 3, in which, the manifold housing (31) having a rectangular section for passage of the flow of intake gas, the injection means open onto at least one length of the manifold housing (31).

5. Manifold according to Claim 4, in which the injection means open onto at least two adjacent sides of the manifold housing (31).

6. Manifold according to one of Claims 2 to 5, in which the injection means are formed in the manifold housing (31).

7. Manifold according to one of Claims 2 to 6, in which, the manifold housing (31) comprising walls for guiding the intake flow (G), the injection means are formed at a distance from said walls.

8. Device for mixing a flow of intake gas (G) and a flow of recirculated exhaust gases (H) for their intake into the cylinder head (4) of a heat engine of a motor vehicle, the device comprising:
- a heat exchanger (2) comprising a gas cooling heat exchange bundle (G) and
- a gas distribution manifold (3) in the cylinder head (4) according to one of Claims 1 to 7.
